# EUROPEAN PATENT SPECIFICATION

(11) **EP 2 944 780 B1**
(45) Date of publication and mention of the grant of the patent: **06.07.2016**
(21) Application number: 15167442.1
(22) Date of filing: 12.05.2015
(51) Int. Cl.: F01N 3/20

(54) **TANK FOR THE COLLECTION OF SOLID MATRICES TO STORE AMMONIA FOR AN EXHAUST SYSTEM PROVIDED WITH EXHAUST GAS AFTER-TREATMENT IN AN INTERNAL CUMBUSTION ENGINE**
BEHÄLTER FÜR FESTES MATERIAL ZUR SPEICHERUNG VON AMMONIAK FÜR EIN ABGASSYSTEM ZUR ABGASNACHBEHANDLUNG IN EINEM VERBRENNUNGSMOTOR
RÉSERVOIR POUR DES MATRICES SOLIDES SERVANT À STOCKER DE L'AMMONIAC POUR UN SYSTÈME D'ÉCHAPPEMENT POUR LE POST-TRAITEMENT DE GAZ D'ÉCHAPPEMENT DANS UN MOTEUR À COMBUSTION INTERNE

(30) Priority: 12.05.2014 IT BO20140282
(43) Date of publication of application: 18.11.2015
(73) Proprietor: Magneti Marelli S.p.A., 20011 Corbetta (MI) (IT)
(72) Inventor: OSBAT, Giovanni, 48025 RIOLO TERME (IT)
(74) Representative: Maccagnan, Matteo

(56) References cited:
- EP-A1- 1 977 817
- EP-A1- 2 428 490
- FR-A1- 2 987 758

## Description

### TECHNICAL FIELD

The present invention relates to a tank for the collection of solid matrices able to store ammonia for an exhaust gas after-treatment system in an internal combustion engine.

### PRIOR ART

As known, future international standards related to the containment of automotive polluting gas emissions (the so-called "Euro 5" and "Euro 6" or "Tier 2 Bin 5" standards) will contemplate a very low limit for the NOₓ molecules which may be released into the atmosphere.

Respecting such limits is particularly critical for diesel engines; for this reason, it has been suggested to equip the exhaust system of a diesel engine with a further SCR (Selective Catalytic Reduction) catalyzer suited to convert the NOₓ (NO₂ or NO) molecules into nitrogen (N₂), which is an inert gas, and water (H₂O). The reduction reaction of NOₓ molecules into nitrogen (N) is difficult to obtain without using an appropriate reducing agent, which is generally ammonia (NH₃). The reducing agent must be injected into the exhaust system upstream of the SCR catalyzer in order to be mixed with the exhaust gases before entering the SCR catalyzer.

However, storing ammonia in a car is not advisable due to evident safety reasons related to the fact that ammonia is toxic. Consequently, it has been suggested to store and inject a water solution of urea, because urea is broken down into ammonia by effect of the exhaust gas heat and also in part by catalytic effect.

The exhaust system is thus provided with an aqueous urea solution feeding device which comprises an exhaust duct, a tank comprising the aqueous urea solution and an electromagnetic injector which is provided to inject the pressurized aqueous urea solution coming from the tank into the exhaust duct. The feeding device comprises, in turn, a pump which draws from the tank to feed the aqueous urea solution and send it pressurized to the electromagnetic injector and which is submerged inside the tank.

However, the exhaust systems of the above described have some drawbacks. In particular, the assembly and the subsequent maintenance of said exhaust system is made difficult by the high number of components; additionally, accurate metering of the ammonia which is injected into the exhaust duct cannot be guaranteed and finally the tanks which contain the aqueous urea solution have a rather considerable weight and size.

Tanks for the collection of solid matrices able to store ammonia have been introduced to solve this problem. For example, EP-A1-1977817 describes a tank provided with a containing body internally divided into a number of radial ducts by means of a plurality of wings; each radial duct is suited to house a solid matrix able to store ammonia on the inside. The collection tanks thus made do not allow to adjust the amount of ammonia desorbed by the solid matrices to be fed into the exhaust duct with accuracy.

### DESCRIPTION OF THE INVENTION

It is thus the object of the present invention to provide a tank for the collection of solid matrices able to store ammonia for an exhaust system provided with exhaust gas after-treatment in an internal combustion engine and to an exhaust system of an internal combustion engine for exhaust gas after-treatment which are free from the drawbacks of the prior art and which are easy and cost-effective to make.

According to the present invention, a tank for the collection of solid matrices able to store ammonia and an exhaust system for the after-treatment of exhaust gases in an internal combustion engine as disclosed in the accompanying claims are provided.

### BRIEF DESCRIPTION OF THE DRAWINGS

The present invention will now be described with reference to the accompanying drawings, which show a non-limitative embodiment thereof, in which:
- figure 1 is a diagrammatic view of an exhaust system of an internal combustion engine provided with a tank for the collection of solid matrices able to store ammonia made according to the present invention;
- figure 2 is a diagrammatic view of a first embodiment of the tank shown in figure 1;
- figure 3 is a perspective view of a solid matrix able to store ammonia in figure 2; and

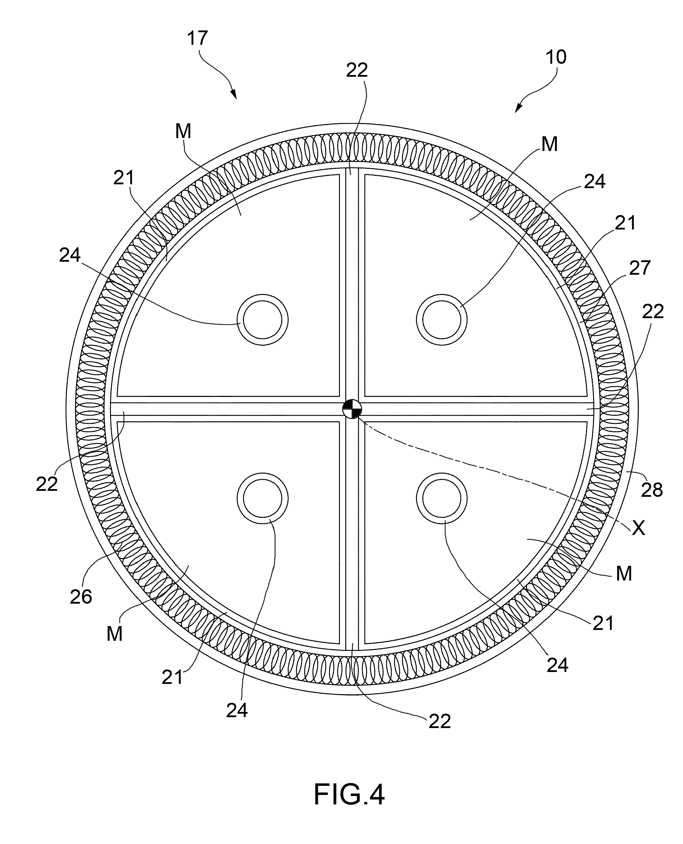

- figure 4 is a diagrammatic view of a second embodiment of the tank shown in figure 1.

### PREFERRED EMBODIMENTS OF THE INVENTION

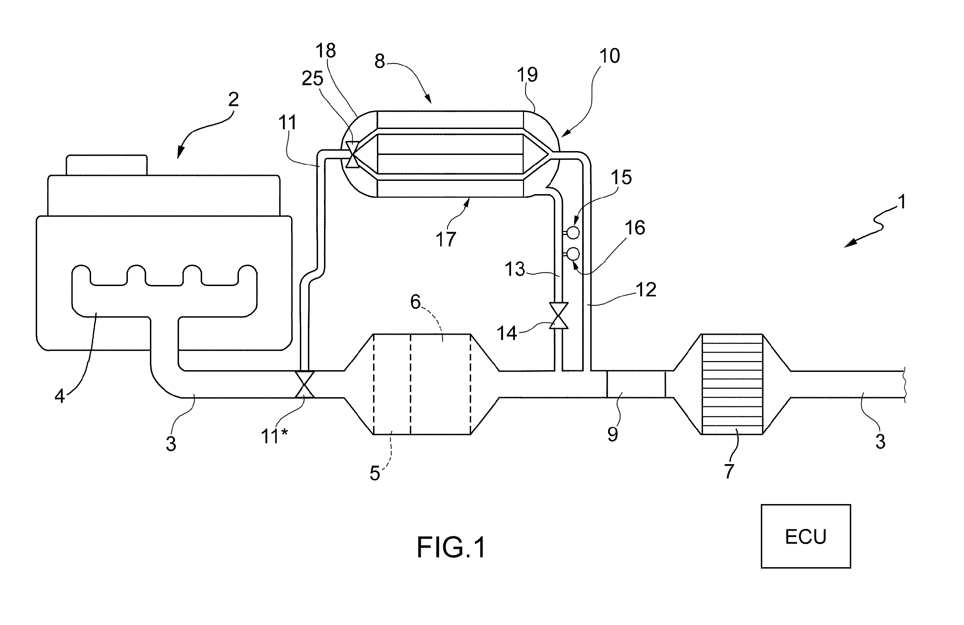

In figure 1, numeral 1 indicates as a whole an exhaust system of an internal combustion engine 2 working in accordance with the "diesel" cycle (i.e. fed with diesel fuel or the like).

The exhaust system 1 emits the gases produced by combustion into the atmosphere and comprises an exhaust duct 3 which departs from an exhaust manifold 4 of the internal combustion engine 2. An oxidizing catalyzer 5 and a particulate trap 6 are arranged along the exhaust duct 3. In figure 1, the oxidizing catalyzer 5 and the particulate trap 6 are arranged in sequence in a same common tubular container.

Furthermore, an SCR (Selective Catalytic Reduction) catalytic system 7 for the post-treatment of the NOₓ molecules (NO and NO₂) is arranged along the exhaust duct 3 and downstream of the oxidizing catalyzer. According to a variant shown in figure 1, the SCR catalyzer system 7 comprises a single SCR catalyzer 7. According to a further variant (not shown), the SCR catalyzer system 7 comprises a set (normally three) of catalyzers arranged in series, which together optimize the SCR function for post-treatment of NOₓ molecules.

Immediately upstream of the catalytic system 7, an introduction device 8, coupled to the exhaust pipe 3 is provided and arranged to introduce ammonia (NH₃) into the exhaust duct 3 itself, which ammonia works as reducer in the catalytic system 7 to facilitate the breakdown creation of the NOₓ molecules into nitrogen (N₂) and water (H₂O).

According to a preferred variant, a static mixer 9 is inserted along the exhaust duct 3 and at the introduction device 8, the function of which is to promote the mixing of the ammonia in the exhaust gases making the dispersion of the ammonia in the exhaust gases more uniform. Preferably, the static mixer is arranged along the exhaust duct 3 downstream of the introduction device 8. According to a further variant, the static mixer is arranged along the exhaust duct 3 upstream of the introduction device 8.

The introduction device 8 comprises a tank 10 containing ammonia, a duct 11, which originates from the exhaust duct 3 and leads into the tank 10 and a bypass valve 11*, which allows to convey a portion of exhaust gases flowing in the exhaust pipe 3 itself towards the tank 10. The introduction device 8 further comprises a duct 12, which originates from the tank 10 and leads into the exhaust pipe 3 to re-introduce the exhaust gases 3 which have crossed the tank 10 into the exhaust duct. According to a preferred embodiment, the bypass valve 11* is a three-way valve and is arranged along the exhaust duct 3 at the point in which the duct 11 originates. Furthermore, the introduction device 8 comprises a further ammonia delivery duct 13 which originates from the tank 10 and leads into the exhaust duct 3 (preferably downstream of the introduction point of the duct 12) to feed the ammonia into the exhaust pipe 3 itself. A shut-off valve 14 is also provided along the ammonia delivery duct 13 to adjust the amount of ammonia to be introduced into the exhaust duct 3. Finally, a pressure sensor 15 and a temperature sensor 16 are housed along the ammonia delivery duct 13 which are connected to an electronic control unit ECU which receives a signal indicative of the amount of ammonia which is required to abate the NOx and controls the shut-off valve 14 as a function of the amount of ammonia which is required to abate the NOx and the signals coming from the pressure sensor 15 and the temperature sensor 16.

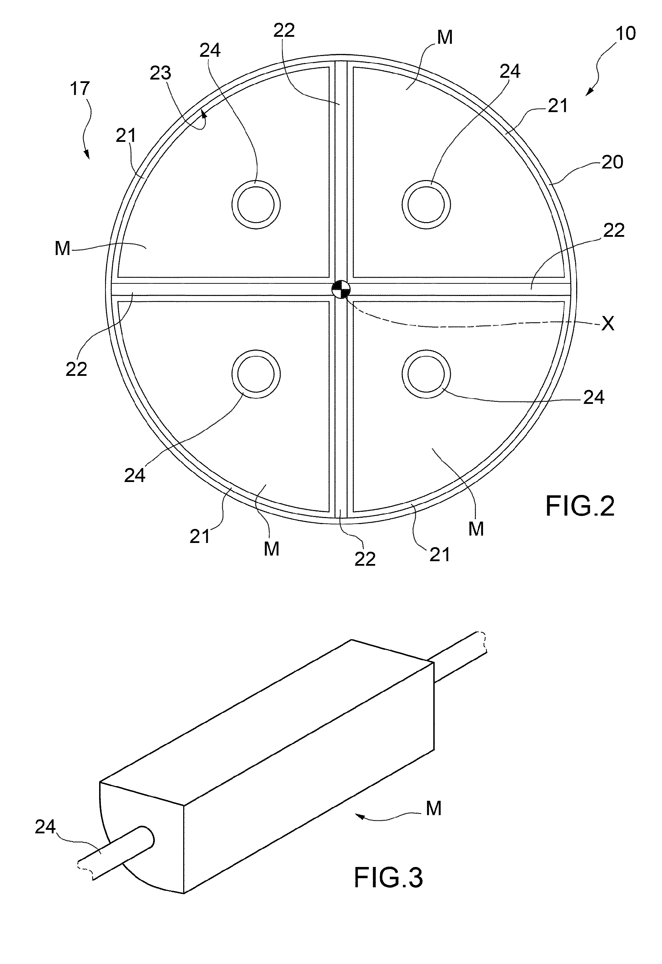

Figure 2 shows the tank 10 which encloses inside the solid matrices able to store ammonia in greater detail.

In particular, the tank 10 comprises a tube-shaped outer body 17 in which the solid matrices M are inserted. The containing body 17 has a cylindrical symmetry about a symmetry axis X and is closed, at its ends, by a front wall and by a rear wall, indicated by reference numerals 18 and 19, respectively, in figure 1.

The containing body 17 is defined by an outer cylindrical wall 20 coaxial to the symmetry axis X.

The cylindrical outer wall 20 is made of steel, preferably stainless steel, or another metal having equivalent features. The cylindrical outer wall 20 is made of a material able to withstand the high temperatures which are generated in the tank 10 (equal to approximately 2-3 bar). According to a preferred variant, the outer cylindrical wall 20 is thermally insulated.

A chamber having a circular section in which the ammonia is housed, as described in greater detail below, is defined inside the containing body.

The chamber is internally divided into a number of ducts 21 by means of radial wings 22. In particular, the chamber is divided internally by means of a number of radial wings 22 uniformly distributed about the symmetry axis X so as to divide the chamber into ducts 21 of the same size. Each radial wing 22 extends to an inner surface 23 of the cylindrical outer wall 20. According to a preferred variant, the chamber is internally divided into four ducts 21 by means of four radial wings 22 arranged orthogonally with respect to one another.

According to a further variant (not shown) the chamber is internally divided into three ducts 21 by means of three radial wings 22 arranged so as to form 120° angles with respect to one another.

According to a further variant (not shown), any number k of radial wings 22 are provided, which are preferably uniformly distributed about the symmetry axis X to define k ducts 21 of equal size.

According to a further variant (not shown), the radial wings 22 are arranged in non-uniform manner about the symmetry axis X so as to divide the chamber into ducts 21 of mutually different size.

According to a preferred variant, the radial wings 22 extend for the entire length of the containing body 17.

According to a preferred variant, the radial wings 22 are suited to mechanically support the solid matrices M and are made of steel, preferably stainless steel, or of another material having equivalent features.

According to a further variant, the radial wings 22 are made of a material with a high thermal conductivity, so as to increase the heat exchange with the solid matrices M.

Each radial duct 21 is suited to contain inside a solid matrix M able to store ammonia. The tank 10 can house one solid matrix M for each duct 21, i.e. four mutually equal solid matrices M for each of the ducts 21.

Each solid matrix M is made of any solid material able to store ammonia. Among these, for example, particularly suited are magnesium chloride (Mg(NH3)6Cl2), calcium chloride (Ca(NH3)8Cl2) or strontium chloride (Sr(NH3)8Cl2) and any other material having equivalent features and able to store ammonia.

Furthermore, each duct 21 comprises a channel 24, which extends for the entire length of the respective duct 21 and runs substantially parallel to the symmetry axis. Each channel 24 is suited to allow the passage of exhaust gases coming from the exhaust duct 3 which are conveyed through the duct 11 and then flow into the duct 12 which leads back into the exhaust duct 3 to reintroduce the exhaust gases which have crossed the tank 10 into the exhaust duct 3. The exhaust gases cross the channels 24 at rather high temperatures, in the order of approximately 190°C, and are suited to allow the passage of heat towards the solid matrix M of the respective duct 21. As the channels 24 are made to promote the passage of heat from the exhaust gases to the solid matrices M, they are made of a material with a high thermal conductivity and are arranged in a central position of the respective solid matrices M (i.e. of the respective channel 21) to allow a substantially uniform heating of the solid matrices M.

According to a preferred variant, the exhaust gas flow which is introduced into each channel 24 is adjusted by means of a specific adjustment valve 25 (only one of which is shown in figure 1); each adjustment valve 25 is connected to the electronic control unit ECU and is controlled by the electronic control unit ECU as a function of the amount of ammonia required to abate the NOx.

According to a further variant, the exhaust gas flow which is introduced into any number of channels 24 (for example, into a pair of channels 24) is adjusted by means of a specific adjustment valve 25 (only one of which is shown in figure 1); each adjustment valve 25 is connected to the electronic control unit ECU and is controlled by the electronic control unit ECU as a function of the amount of ammonia required to abate the NOx.

In use, the electronic control unit ECU receives a signal indicative of the amount of ammonia which is required to abate the NOx and further receives the signals coming from the pressure sensor 15 and the temperature sensor 16.

In case of malfunctioning, which occurs, for example, if the pressure sensor 15 and/or the temperature sensor 16 detect pressure and/or temperature values which are not comprised within the range of safety values, the introduction device 8 can be bypassed by closing the three-way bypass valve 11* and sending the entire exhaust gas flow into the exhaust duct 3.

As a function of the amount of ammonia which is required to abate the NOx, the electronic control unit ECU determines which and how many adjustment valves 25 must be activated to allow the passage of the exhaust gases in the respective channels 24.

The heat transmitted by the passage of exhaust gases to the solid matrices M contained in the ducts 21 allows the ammonia to be desorbed by the material able to store ammonia. If radial wings 22 made of a material with high heat conductivity are used, the heat exchange surface with the solid matrices M is increased so as to make the desorption process of the ammonia from the material able to store ammonia more rapid.

The ammonia is thus present in pressurized gas state in the tank 10; the ammonia produced by each duct 21 is collected and conveyed into the delivery duct 13 of the ammonia; the introduction of the pressurized ammonia in the exhaust duct 3 is then adjusted as a function of the amount of ammonia which is required to abate the NOx through the shut-off valve 14 which is controlled by the electronic control unit ECU.

According to a variant (not shown), the heat needed to heat the solid matrices M is obtained by means of a heat recovery circuit of the cooling liquid of the internal combustion engine 2. In particular, the heat obtained by means of the heat exchange with the coolant of the internal combustion engine 2 exiting the internal combustion engine 2 which is conveyed through a supply duct to the tank 10. The coolant liquid crosses the tank 10 in direction parallel to the symmetry axis X running in the ducts 21 and exchanging heat with the solid matrices M and afterward, by crossing a return duct, is re-introduced into the internal combustion engine 2. The bypass valve 11* is suited to adjust the amount of coolant fed to the tank 10, which in this case is arranged along the supply duct 10.

According to a further variant, the tank 10 also comprises a heater 26 suited to accelerate the desorption of the ammonia into material able to store ammonia in the solid matrices M. In particular, the tube-shaped outer body 17 in which the solid matrices M are inserted comprise an inner wall 27, having a cylindrical symmetry about the symmetry axis X and made of a material having a high thermal conductivity; the outer wall 28, having a cylindrical symmetry about the symmetry axis X and made of a material made of steel, preferably stainless steel, or another material having equivalent features and preferably thermally insulated; and the heater 26 also having a cylindrical symmetry about the symmetry axis X interposed between the inner wall 27 and the outer wall 28. The heater 26 preferably extends for the entire length of the outer body 17 and defines a liner which internally surrounds the solid matrices M and, if activated, can provide the heat needed to accelerate the desorption process of the ammonia from the material able to store ammonia in the solid matrices M. The heater 26 is connected to the electronic control unit ECU and is controlled by the electronic control unit ECU as a function of the amount of ammonia required to abate the NOx. The heater 26 consists of a plurality of heating modules which can be activated either independently or jointly as a function of the amount of ammonia which is required to abate the NOx; the electric power is provided only to activate the necessary heating modules which work on the solid matrices M contained in the respective ducts 21.

It is apparent that the exhaust system 1 provided with exhaust gas post-treatment in an internal combustion 2 described hereto is entirely independent from the type of tank 10 used. For example, a tank for the collection of solid matrices able to store ammonia comprising a containing body may be provided with a symmetry axis and internally divided into a number of longitudinal sections by means of a number of partitions arranged transversely to the symmetry axis; wherein each longitudinal section is divided, in turn, into a number of radial sections by means of a plurality of radial wings, which are distributed around the symmetry axis; wherein each radial section is suited to house a solid matrix able to store ammonia inside. Wherein the tank is preferably made as described in patent application BO2013A000370, incorporated herein for reference and comprises a heater arranged substantially coaxial to the symmetry axis and provided with a number of heating modules which is preferably equal to the number of longitudinal sections, which can be activated independently from one another as a function of the ammonia needs of the exhaust system provided with exhaust gas post-treatment, in which each heating module is suited to heat a respective longitudinal section.

Both the tank 10 for the collection of solid matrices M able to store ammonia and the exhaust system 1 provided with exhaust gas after-treatment in an internal combustion engine 2 described hereto has many advantages. Firstly, they are simple and cost-effective to make, compact and allow an efficient management of the exhaust gases and of the electric power to be supplied to the heater 26 thus considerably reducing the operating time of the tank 10 for the collection of solid matrices M able to store ammonia.

## Claims

1. A tank (10) for the collection of solid matrices (M) able to store ammonia for an exhaust system (1) provided with exhaust gas after-treatment in an internal combustion engine (2) comprising:
a containing body (17), which is provided with a symmetry axis (X); the containing body (17) being divided, on the inside, into a number of radial ducts (21) by means of a plurality of radial wings (22), which are distributed around the symmetry axis (X); wherein each radial duct (21) is suited to house on the inside a solid matrix (M) able to store ammonia;
the tank (10) is **characterized in that** it comprises a number of channels (24), which are obtained inside a respective radial duct (21); wherein each channel (24) extends along the entire length of the respective radial duct (21) in a direction substantially parallel to the symmetry axis (X) and is made for the passage of a heating fluid, so as to permit the heat exchange from the heating fluid to the respective solid matrix (M) able to store ammonia.

2. A tank according to claim 1, wherein the channels (24) are arranged in a substantially central position of the respective radial duct (21) so as to permit a substantially uniform heating of the respective solid matrix (M).

3. A tank according to claim 1 or 2, wherein the channels (24) are made of a material with a high thermal conductivity.

4. A tank according to any of the preceding claims, wherein the radial wings (22) are made to mechanically support the solid matrices (M) and are preferably made of steel or of another material with equivalent features.

5. A tank according to any of the preceding claims, wherein the radial wings (22) are uniformly distributed around the symmetry axis (X) so as to define radial ducts (21) of the same size.

6. A tank according to any of the preceding claims, wherein the containing body (17) comprises an outer cylindrical wall (20), which is coaxial to the symmetry axis (X); the radial wings (22) extend along the entire length of the containing body (17) and project up to an inner surface (23) of the outer cylindrical wall (20).

7. A tank according to any of the preceding claims and comprising a number of control valves (25), which are suited to adjust the passage of heating fluid in a group of channels (24) as a function of the amount of ammonia requested.

8. A tank according to any of the preceding claims, wherein the containing body (17) has a cylindrical symmetry around the symmetry axis (X) and comprises a heater (26), which has a cylindrical symmetry around the symmetry axis (X), as well, preferably extends along the entire length of the containing body (17), defines a liner which entirely surrounds the solid matrices (M) able to store ammonia, and is suited to provide the heat needed to accelerate the process which causes the desorption of ammonia from the solid matrices (M) able to store ammonia.

9. A tank according to claim 8, wherein the heater (26) consists of a plurality of heating modules, which can be activated independently of one another as a function of the amount of ammonia requested.

10. A tank according to any of the preceding claims, wherein the solid matrices are made of any solid material able to store ammonia, said material being preferably chosen among: magnesium chloride (Mg(NH3)6Cl2), calcium chloride (Ca(NH3)8Cl2) or strontium chloride (Sr(NH3)8Cl2).

11. A tank according to any of the preceding claims, wherein the ammonia exiting the tank (10) is conveyed in an ammonia delivery duct (13) which leads to an exhaust duct (3) which originates from an exhaust manifold of the internal combustion engine (2).

12. An exhaust system (1) for an internal combustion engine (2) for exhaust gas after-treatment comprising:
an exhaust duct (3), which originates from an exhaust manifold of the internal combustion engine (2);
a tank (10) for the collection of a number of solid matrices (M) able to store ammonia;
an ammonia delivery duct (13), which originates from the tank (10) and leads to the exhaust duct (3); and
a feeding circuit (8) of a heating fluid to the tank (10), made to permit the heat exchange from the heating fluid to said number of solid matrices (M) able to store ammonia; wherein the feeding circuit (8) comprises a bypass valve (11*), which is suited to adjust the amount of heating fluid fed to the tank (10);
the exhaust system is **characterized in that** the tank (10) for the collection of a number of solid matrices (M) able to store ammonia is made according to one or more of the claims from 1 to 11.

## Patentansprüche

1. Behälter (10) zum Aufnehmen von festem, zur Speicherung von Ammoniak fähigem Material (M) für ein Abgassystem (1), das mit einer Abgasnachbehandlung in einem Verbrennungsmotor (2) versehen ist, aufweisend:
einen enthaltenden Körper (17), der eine Symmetrieachse (X) hat; wobei der enthaltende Körper (17) auf der Innenseite mittels einer Vielzahl radialer Flügel (22), die um die Symmetrieachse (X) herum verteilt sind, in eine Zahl radialer Durchgänge (21) unterteilt ist; wobei jeder radiale Durchgang (21) geeignet ist, auf der Innenseite ein festes, zum Speichern von Ammoniak fähiges Material (M) aufzunehmen;
der Behälter (10) ist **dadurch gekennzeichnet, dass** er eine Zahl von Kanälen (24) aufweist, die innerhalb eines jeweiligen radialen Durchgangs (21) erhalten werden; wobei jeder Kanal (24) entlang der gesamten Länge des jeweiligen radialen Durchgangs (21) im Wesentlichen parallel zur Symmetrieachse (X) verläuft und für den Durchlauf eines heizenden Fluids gestaltet ist, um den Wärmetausch vom heizenden Fluid zum jeweiligen festen, zum Speichern von Ammoniak fähigen Material (M) zu erlauben.

2. Behälter nach Anspruch 1, wobei die Kanäle (24) in einer im Wesentlichen mittigen Stellung des jeweiligen radialen Durchgangs (21) angeordnet sind, um eine im Wesentlichen gleichmäßige Erwärmung des jeweiligen festen Materials (M) zu erlauben.

3. Behälter nach Anspruch 1 oder 2, wobei die Kanäle (24) aus einem Material mit hoher Wärmeleitfähigkeit hergestellt sind.

4. Behälter nach einem der vorangegangenen Ansprüche, wobei die radialen Flügel (22) gestaltet sind, um das feste Material (M) mechanisch zu halten, und vorzugsweise aus Stahl oder einem sonstigen Material mit gleichwertigen Eigenschaften hergestellt sind.

5. Behälter nach einem der vorangegangenen Ansprüche, wobei die radialen Flügel (22) gleichmäßig um die Symmetrieachse (X) verteilt sind, um radiale Durchgänge (21) derselben Größe festzulegen.

6. Behälter nach einem der vorangegangenen Ansprüche, wobei der enthaltende Körper (17) eine äußere zylindrische Wand (20), die mit der Symmetrieachse (X) achsgleich ist, aufweist; wobei die radialen Flügel (22) entlang der gesamten Länge des enthaltenden Körpers (17) verlaufen und bis zu einer inneren Oberfläche (23) der äußeren zylindrischen Wand (20) vorspringen.

7. Behälter nach einem der vorangegangenen Ansprüche und eine Zahl von Steuerungsventilen (25) aufweisend, die geeignet sind, den Durchlauf eines heizenden Fluids in einer Gruppe von Kanälen (24) in Abhängigkeit von der angeforderten Ammoniakmenge anzupassen.

8. Behälter nach einem der vorangegangenen Ansprüche, wobei der enthaltende Körper (17) eine zylindrische Symmetrie um die Symmetrieachse (X) hat und eine Heizung (26) aufweist, die ebenfalls eine zylindrische Symmetrie um die Symmetriachse (X) hat, vorzugsweise entlang der gesamten Länge des enthaltenden Körpers (17) verläuft, einen Mantel festlegt, der das feste, zum Speichern von Ammoniak fähige Material (M) vollständig umgibt und geeignet ist, die Wärme bereitzustellen, die nötig ist, um den Prozess, der die Desorption von Ammoniak aus dem festen, zum Speichern von Ammoniak fähigen Material (M) bewirkt, zu beschleunigen.

9. Behälter nach Anspruch 8, wobei die Heizung (26) aus einer Vielzahl von heizenden Modulen besteht, die unabhängig voneinander in Abhängigkeit von der angeforderten Ammoniakmenge aktiviert werden können.

10. Behälter nach einem der vorangegangenen Ansprüche, wobei das feste Material aus einem zum Speichern von Ammoniak fähigen Material besteht, wobei das Material vorzugsweise ausgewählt wird aus: Magnesiumchlorid (Mg(NH3)6C12), Kalziumchlorid (Ca(NH3)8C12) oder Strontiumchlorid (Sr(NH3)8Cl2).

11. Behälter nach einem der vorangegangenen Ansprüche, wobei das den Behälter (10) verlassende Ammoniak in einer Ammoniakförderleitung (13) geleitet wird, die zu einer Abgasleitung (3) führt, die ihren Ursprung in einem Abgaskrümmer des Verbrennungsmotors (2) hat.

12. Abgassystem (1) für einen Verbrennungsmotor (2) zur Abgasnachbehandlung, aufweisend:
eine Abgasleitung (3), die ihren Ursprung in einem Abgaskrümmer des Verbrennungsmotors (2) hat;
einen Behälter (10) zum Aufnehmen einer Menge festen, zum Speichern von Ammoniak fähigen Materials (M);
eine Ammoniakförderleitung (13), die ihren Ursprung im Behälter (10) hat und zur Abgasleitung (3) führt; und
einen Zufuhrkreis (8) für ein heizendes Fluid zum Behälter (10), der gestaltet ist, um einen Wärmetausch vom heizenden Fluid zur Menge des festen, zum Speichern von Ammoniak fähigen Materials (M) zu erlauben; wobei der Zufuhrkreis (8) ein Bypassventil (11*) aufweist, das geeignet ist, die Menge des dem Behälter (10) zugeführten, heizenden Fluids anzupassen;
das Abgassystem ist **dadurch gekennzeichnet, dass** der Behälter (10) für das Aufnehmen einer Menge eines festen, zum Speichern von Ammoniak fähigen Materials (M) nach einem oder mehr der Ansprüche 1 bis 11 hergestellt ist.

## Revendications

1. Réservoir (10) pour la collecte de matrices solides (M), susceptible de stocker de l'ammoniac pour un système d'échappement (1) comportant un post-traitement de gaz d'échappement dans un moteur à combustion interne (2), comprenant :
un corps de contenant (17), qui comporte un axe de symétrie (X) ; le corps de contenant (17) étant divisé, à l'intérieur, en un certain nombre de conduits radiaux (21) à l'aide d'une pluralité d'ailes radiales (22), qui sont réparties autour de l'axe de symétrie (X) ; chaque conduit radial (21) étant approprié pour renfermer à l'intérieur une matrice solide (M) susceptible de stocker de l'ammoniac ;
le réservoir (10) étant **caractérisé en ce qu'**il comprend un certain nombre de canaux (24), qui sont réalisés à l'intérieur d'un conduit radial respectif (21) ; chaque canal (24) s'étendant le long de la totalité de la longueur du conduit radial respectif (21) dans une direction sensiblement parallèle à l'axe de symétrie (X) et étant constitué pour le passage d'un fluide de chauffage, de façon à permettre l'échange de chaleur du fluide de chauffage à la matrice solide (M) susceptible de stocker de l'ammoniac respective.

2. Réservoir selon la revendication 1, dans lequel les canaux (24) sont disposés dans une position sensiblement centrale du conduit radial respectif (21), de façon à permettre un chauffage sensiblement uniforme de la matrice solide respective (M).

3. Réservoir selon la revendication 1 ou 2, dans lequel les canaux (24) sont réalisés en un matériau avec une conductivité thermique élevée.

4. Réservoir selon l'une quelconque des revendications précédentes, dans lequel les ailes radiales (22) sont réalisées de façon à supporter mécaniquement les matrices solides (M), et sont de préférence réalisées en acier ou en un autre matériau avec des caractéristiques équivalentes.

5. Réservoir selon l'une quelconque des revendications précédentes, dans lequel les ailes radiales (22) sont réparties de façon uniforme autour de l'axe de symétrie (X) de façon à définir des conduits radiaux (21) de la même taille.

6. Réservoir selon l'une quelconque des revendications précédentes, dans lequel le corps de contenant (17) comprend une paroi cylindrique extérieure (20), qui est coaxiale à l'axe de symétrie (X) ; les ailes radiales (22) s'étendant le long de la totalité de la longueur du corps de contenant (17) et faisant saillie jusqu'à une surface intérieure (23) de la paroi cylindrique extérieure (20).

7. Réservoir selon l'une quelconque des revendications précédentes, et comprenant un certain nombre de vannes de commande (25), qui sont appropriées pour ajuster le passage de fluide de chauffage dans un groupe de canaux (24) en fonction de la quantité d'ammoniac requise.

8. Réservoir selon l'une quelconque des revendications précédentes, dans lequel le corps de contenant (17) présente une symétrie cylindrique autour de l'axe de symétrie (X), et comprend un élément chauffant (26), qui présente également une symétrie cylindrique autour de l'axe de symétrie (X), s'étendant de préférence le long de la totalité de la longueur du corps de contenant (17), définissant un chemisage qui entoure entièrement les matrices solides (M) susceptibles de stocker de l'ammoniac, et étant approprié pour délivrer la chaleur nécessaire pour accélérer le processus qui provoque la désorption d'ammoniac à partir des matrices solides (M) susceptibles de stocker de l'ammoniac.

9. Réservoir selon la revendication 8, dans lequel l'élément chauffant (26) est constitué par une pluralité de modules de chauffage, qui peuvent être activés indépendamment les uns des autres en fonction de la quantité d'ammoniac requise.

10. Réservoir selon l'une quelconque des revendications précédentes, dans lequel les matrices solides sont constituées par n'importe quel matériau solide susceptible de stocker de l'ammoniac, ledit matériau étant de préférence choisi parmi : le chlorure de magnésium (Mg(NH₃)₆Cl₂), le chlorure de calcium (Ca(NH₃)₈Cl₂) ou le chlorure de strontium (Sr(NH₃)₈Cl₂).

11. Réservoir selon l'une quelconque des revendications précédentes, dans lequel l'ammoniac sortant du réservoir (10) est acheminé dans un conduit de délivrance d'ammoniac (13) qui mène à un conduit d'échappement (3) qui a pour origine un collecteur d'échappement du moteur à combustion interne (2).

12. Système l'échappement (1) pour un moteur à combustion interne (2) pour le post-traitement de gaz d'échappement, comprenant :
un conduit d'échappement (3), qui a pour origine un collecteur d'échappement du moteur à combustion interne (2) ;
un réservoir (10) pour la collecte d'un certain nombre de matrices solides (M) susceptibles de stocker de l'ammoniac ;
un conduit de délivrance d'ammoniac (13), qui a pour origine le réservoir (10), et qui mène au conduit d'échappement (3) ; et
un circuit de délivrance (8) d'un fluide de chauffage au réservoir (10), constitué de façon à permettre l'échange de chaleur du fluide de chauffage audit nombre de matrices solides (M) susceptibles de stocker de l'ammoniac ; le circuit de délivrance (8) comprenant une vanne de dérivation (11*), qui est appropriée pour ajuster la quantité de fluide de chauffage délivré au réservoir (10) ;
le système d'échappement étant **caractérisé en ce que** le réservoir (10) pour la collecte d'un certain nombre de matrices solides (M) susceptibles de stocker de l'ammoniac est réalisé selon l'une ou plusieurs des revendications 1 à 11.
